# EUROPEAN PATENT APPLICATION

(11) **EP 4 797 798 A1**
(43) Date of publication of application: **26.08.2026**
(21) Application number: 25159577.3
(22) Date of filing: 24.02.2025
(51) Int. Cl.: H04W 36/14

(54) **A CONCEPT FOR CONTROLLING CROSS-BORDER PLMN HANDOVER**

(71) Applicant: Deutsche Telekom AG, 53113 Bonn (DE)
(72) Inventor: KABBOUD, Ahmad, 53175 Bonn (DE); IBRAHIM, Mohamed, 53121 Bonn (DE)
(74) Representative: 2SPL Patentanwälte PartG mbB

(57) **Abstract**

The present disclosure relates to method, apparatus and computer program for controlling cross-border Public Land Mobile Network (PLMN) handover and to a method, apparatus and computer program for communicating information on cross-border PLMN handover being enabled or disabled for a User Equipment (UE). A method for restricting cross-border PLMN handover comprises obtaining (110, 120, 130) information on cross-border PLMN handover being enabled or disabled for a User Equipment, UE, being associated with a serving PLMN, and restricting (150, 160, 170) a set of PLMN being available for handover based on the information on the cross-border PLMN handover being enabled or disabled.

## Description

### Field

The present disclosure relates to method, apparatus and computer program for controlling cross-border Public Land Mobile Network (PLMN) handover and to a method, apparatus and computer program for communicating information on cross-border PLMN handover being enabled or disabled for a User Equipment (UE).

### Background

A PLMN (Public Land Mobile Network) is a network established and operated by a government-licensed operator to provide land-based wireless communication services to the public, such as mobile phone services.

An inter-PLMN handover is the process of transferring an active call or data session from one PLMN to another without interruption. This typically occurs when a User Equipment (UE), such as a smartphone, wearable device, or connected car moves from the coverage area of one network operator to another while maintaining continuity of service.

When a UE moves near the border of two countries, it may be subject to frequent handovers between the PLMN of the two countries. For a person living near the border, this may cause inconveniences, as the user may be subject to a ping-pong effect, which includes frequent and rapid switching of a mobile device's connection between two neighboring PLMN as the user moves near the border of two countries. This can cause delays or instabilities in the connection due to repeated handovers. Moreover, emergency calls might be routed to another network, where the language can be different. Moreover, a large portion of the traffic can be shifted to another network, which may lead to additional cost for the home network.

There may be a desire to provide an improved concept for managing inter-PLMN handover, in particular at the border between two countries.

### Summary

This desire is addressed by the subject matter of the independent claims.

Various examples of the present disclosure are based on the finding that there are circumstances, such as the aforementioned user moving (or even living) close to the border, where a frequent handover between PLMN operating in different countries is undesirable. To avoid this situation, a flag is introduced, in the following denoted "information on cross-border PLMN handover being enabled or disabled for a UE", which is used to enable or disable cross-border PLMN handover, by limiting the set of (equivalent) PLMN being available for handover (e.g., using a handover restriction list or mobility restriction list). Assuming the following method is performed by a mobility entity (such as the MME, Mobility Management Entity, in 4G networks of the AMF, Access and Mobility Management Function, in 5G networks) of the PLMN currently serving the UE (the serving PLMN), this flag can be provided to the MME by a subscriber database, such as the HSS, Home Subscriber Server, in 4G networks or the UDM, Unified Data Management, in 5G networks. Alternatively, the UE can provide the flag directly to the mobility entity, e.g., on a case-by-case basis. This way, the UE (or user of the UE) is enabled to temporarily or permanently disable cross-border PLMN handover on a per-UE basis, thus avoiding the drawbacks without impacting other UEs or the performance of the respective PLMN.

Some aspects of the present disclosure relate to a method for restricting cross-border PLMN handover. The method comprising obtaining information on cross-border PLMN handover being enabled or disabled for a UE being associated with a serving PLMN. The method comprises restricting a set of PLMN being available for handover based on the information on the cross-border PLMN handover being enabled or disabled. By obtaining the information on cross-border PLMN handover being enabled or disabled for a UE, i.e., the flag, the network component (e.g., the mobility entity) performing the method can, on a case-by-case basis, enable or disable seamless cross-border PLMN handover for a UE. This is implemented using the existing mechanism of limiting the PLMN (e.g., equivalent PLMN) being available for handover, e.g., by specifying them in a handover restriction list or mobility restriction list. As a result, the UE or its uses is enabled to switch on or off cross-border PLMN handover as needed, with only a few changes required on the network side to support this mechanism. Note that the set of PLMN being available for may, as a result of restricting the set of PLMN being available for handover, be empty, or contain only PLMN having the same country code as the serving PLMN.

In general, the mechanism being used to support seamless handover across country borders is to specify so-called equivalent PLMN (ePLMN). ePLMN (Equivalent Public Land Mobile Networks) refer to a group of PLMN (Public Land Mobile Networks) considered equivalent by an operator for purposes such as allowing a subscriber to roam without restrictions between these networks. The operator of a PLMN species, which other PLMN are to be regarded as equivalent PLMN (e.g., when crossing the border). Thus, the act of restricting the set of PLMN being available for handover may comprise restricting the set of equivalent PLMN (ePLMN) being available for handover, e.g., using a handover restriction list or mobility restriction list. This way, an existing mechanism can be used to implement the functionality.

In the context of 3GPP (the third-generation partnership project, an industry consortium that is focused on the standardization of mobile communication networks), a handover restriction list (mobility restriction list in 5G) is a set of rules and parameters defined for a mobile device that restricts or controls the handover process between network cells and PLMN. This list ensures that handovers are conducted according to operator-defined policies, such as preventing access to certain networks due to subscription limitations, security reasons, or other operator-specific considerations. A handover restriction list or mobility restriction list, or another type of data structure serving a similar data structure, is in the following denoted a "data structure restricting the PLMN being available for handover". This data structure might only be relevant (e.g., used) for this specific UE, i.e., the data structure may be UE-specific, or it may be relevant for any UE having disabled cross-border PLMN handover. This data structure may include, for example, a set of PLMN (e.g., ePLMN) that can or cannot be used for handover, or it may include a set of rules that allow the RAN (Radio Access Network) component (e.g., a base station, such as an eNodeB or gNodeB/NG-RAN in 4G and 5G networks) or the UE to determine whether handover is permitted to cells of a PLMN.

In a first variant, this data structure may be provided to the RAN component, e.g., using a S1AP message in case of 4G networks or using a N2 interface in case of 5G networks. In other words, the act of restricting the set of PLMN being available for handover may comprise providing, to a RAN component of the serving PLMN, a data structure restricting the PLMN being available for handover. The RAN component uses the data structure, e.g., the handover restriction list or mobility restriction list, to manage and control handovers for the UE. This list specifies which target cells or PLMN are restricted for the UE, guiding the RAN in making handover decisions. This is one way of restricting the set of PLMN being available for handover.

In a second variant, the data structure may be provided to the UE. For example, the act of restricting the set of PLMN being available for handover may comprise providing, to the UE, the data structure restricting the PLMN being available for handover. This limits the PLMN (e.g., ePLMN) that the UE treats as being equivalent to the home PLMN, thereby restricting handover to PLMN omitted from the data structure. This is a way of restricting the set of PLMN being available for handover, in particular for idle mode. Both variants may be combined, for example. For example, the data structure may be provided to the mobility entity to restrict the set of PLMN being available for handover in connected mode and to the UE to restrict the set of PLMN being available for handover in idle mode.

For example, the data structure provided to the UE may be provided as a Non-Access Stratum (NAS) message. NAS signaling provides an established communication channel between the mobility entity (performing the method) and the UE.

In some examples, the data structure restricting the PLMN being available for handover may limit the PLMN being available for handover to PLMN having a country code being the country code of the serving PLMN. As a result, the set may be empty, or contain only (e)PLMN having the same country code as the serving PLMN. This way, cross-border handover can be disabled.

As outlined above, there are multiple feasible mechanisms for obtaining the flag on cross-border PLMN handover being enabled or disabled for the UE. For example, the act of obtaining the information on cross-border PLMN handover being enabled or disabled for the UE may comprise obtaining the information on cross-border PLMN handover being enabled or disabled for the UE from a subscriber database of a home PLMN of the UE. This way, the UE or the user of the UE can store the flag on the network side, so it does not have to be retransmitted every time the UE re-attaches or re-registers.

Subscriber databases, such as HSS or UDM, have existing data structures, such as the UDR (Unified Data Repository) in 5G, that can be used for storing the flag (and providing it to the respective mobility entity). For example, the information on cross-border PLMN handover being enabled or disabled for the UE may be a flag in a subscription data flag data structure obtained from the subscriber database of the home PLMN. For example, this mechanism may be used in 4G networks.

Alternatively, the information on cross-border PLMN handover being enabled or disabled for the UE may be a flag in an Access and Mobility Portion of a Subscription Data Sets data structured obtained from the subscriber database of the home PLMN. For example, this mechanism may be used in 5G networks.

In general, the cross-border PLMN handover feature (which can also be denoted inter-PLMN seamless mobility feature or cross-border PLMN mobility), which is controlled using the proposed mechanism, can be configured in the mobility entity and delivered to the RAN component as part of the attach or registration procedure or as part of a tracking area update. Accordingly, the act of obtaining the information on cross-border PLMN handover being enabled or disabled for the UE may be performed in response to the UE performing one of an initial attach procedure, a tracking area update procedure or a registration procedure. This way, the proposed concept can be integrated with existing mechanisms, which lowers the implementation complexity.

In 5G networks, notifications can be used to transmit updates between network components. For example, in 5G networks, the Unified Data Management (UDM) can send notifications to the Access and Mobility Management Function (AMF) using a service-based architecture. The UDM subscribes and notifies changes through its service interfaces (e.g., Nudm_Sub-scriberDataManagement) to the AMF. This allows the AMF to promptly receive updates on user data or subscription changes. This mechanism can be used to transmit updates on the flag to the mobility entity. Accordingly, the information on cross-border PLMN handover being enabled or disabled for the UE may be obtained as part of a notification for notifying the mobility entity of a change to the subscriber database. This way, the flag can be communicated to the mobility entity without requiring a re-attachment or re-registration procedure from the UE, which would result in a connection loss.

As outlined above, in some examples, the flag may be provided directly by the UE to the MME. In other words, the act of obtaining the information on cross-border PLMN handover being enabled or disabled for the UE may comprise obtaining the information on cross-border PLMN handover being enabled or disabled for the UE from the UE. This way, the UE can switch on or off this feature on a case-by-case basis without requiring an update at the subscriber database. Again, NAS signaling may be used for this purpose. In other words, the information on the cross-border PLMN being enabled or disabled for the UE may be obtained from the UE as part of a Non-Access Stratum, NAS, message.

In general, this flag may be applied as long as the UE is serviced by the serving PLMN. For this reason, it may be stored in a mobility context of the UE (regardless of whether the flag is obtained from the subscriber database or from the UE). In other words, the method may comprise storing the information on cross-border PLMN handover being enabled or disabled for the UE in a mobility context of the UE. This way, the flag does not have to be re-obtained as long as the mobility context persists.

In many implementations, this method may be performed by a mobility entity, such as the MME or AMF, of a core network of the serving PLMN of the UE. For example, in a core network according to a 4th Generation of the 3rd Generation Partnership Project, the mobility entity may be the MME of the core network. In a core network according to a 5th Generation of the 3rd Generation Partnership Project, the mobility entity may be the AMF of the core network. However, the proposed concept is not limited to 4G and 5G networks and can be applied similarly to corresponding entities of future generations of mobile communication networks.

An aspect of the present disclosure relates to a corresponding apparatus for a network node for a PLMN, e.g., for a mobility entity of the PLMN. The apparatus comprises processing circuitry configured to perform the above method. Another aspect of the present disclosure relates to a mobility entity, such as an MME or AMF, comprising the apparatus.

Another aspect of the present disclosure relates to a computer program having a program code for performing the above method, when the computer program is executed on a computer, a processor, or a programmable hardware component.

Another aspect of the present disclosure relates to storing the flag in the core network, e.g., in the subscriber database. Accordingly, the following method may be performed by a subscriber database (or network component managing the subscriber database) of the home PLMN of the UE. A method for communicating information on cross-border PLMN handover being enabled or disabled for a UE comprises obtaining information on a change of the cross-border PLMN handover being enabled or disabled for the UE. The method comprises storing the information on the cross-border PLMN handover being enabled or disabled for the UE (e.g., in the subscriber database). The method comprises providing the information on the cross-border PLMN handover being enabled or disabled for the UE to a mobility entity of a serving PLMN of the UE. This way, the flag is persisted in the network and can be applied for subsequent interactions with the UE.

When a user enables or disables the cross-border PLMN handover while being connected, the new setting might not be automatically applied. To apply the settings, the mobility entity may be triggered to obtain the information on the cross-border PLMN handover being enabled or disabled for the UE from the subscriber database. This can be done by causing the UE to re-attach / re-register. Accordingly, the method may comprise, prior to providing the information on the cross-border PLMN handover being enabled or disabled for the UE to the mobility entity, providing a cancel location request or a deregistration notification to the mobility entity, to cause the mobility entity to obtain the changed information on the cross-border PLMN handover being enabled or disabled for the UE.

In 5G networks, another mechanism exists that avoids the UE having to re-attach or re-register. As outlined above, the information on the cross-border PLMN handover being enabled or disabled for the UE may be provided to the mobility entity as part of a notification. This way, a re-attachment or re-registration of the UE may be avoided.

Another aspect of the present disclosure relates to an apparatus for a network node for a PLMN, e.g., for a subscriber database or network component managing the subscriber database, such as the HSS or UDM. The apparatus comprises processing circuitry configured to perform the above method. Another aspect relates to a subscriber database or network component managing the subscriber database comprising the apparatus.

Another aspect of the present disclosure relates to a system, such as a PLMN, comprising the mobility entity and the subscriber database or network component managing the subscriber database.

Another aspect of the present disclosure relates to a computer program having a program code for performing the above method, when the computer program is executed on a computer, a processor, or a programmable hardware component.

### Brief description of the Figures

Some examples of apparatuses and/or methods will be described in the following by way of example only, and with reference to the accompanying figures, in which
- Fig. 1a: shows a flow chart of an example of a method for restricting cross-border PLMN handover;
- Fig. 1b: shows a block diagram of an apparatus for restricting cross-border PLMN handover, a mobility entity comprising the apparatus, and a system comprising the mobility entity;
- Fig. 2: shows an example table of subscription-data flags;
- Fig. 3: shows a sequence diagram of changing and applying a flag for controlling a seamless cross-border PLMN handover feature in 4G networks from the network side;
- Fig. 4: shows a table of UE Network Capabilities;
- Fig. 5: shows a sequence diagram of changing and applying a flag for controlling a seamless cross-border PLMN handover feature in 4G networks from the UE side using an attach procedure;
- Fig. 6: shows a sequence diagram of changing and applying a flag for controlling a seamless cross-border PLMN handover feature in 4G networks from the UE side using a tracking area update procedure;
- Fig. 7: shows a sequence diagram of retrieving a flag for controlling a seamless cross-border mobility feature in the UDM of 5G networks;
- Fig. 8: shows a sequence diagram of applying a flag for controlling a seamless cross-border PLMN handover feature in 5G networks from the network side using a de-registration procedure;
- Figs. 9 and 10: show sequence diagrams of applying a flag for controlling a seamless cross-border PLMN handover feature in 5G networks from the network side using a notification;
- Fig. 11: shows a sequence diagram of changing and applying a flag for controlling a seamless PLMN handover feature in 5G networks from the UE side using a registration procedure;
- Fig. 12a: shows a flow chart of an example of a method for communicating information on cross-border PLMN handover being enabled or disabled for a UE; and
- Fig. 12b: shows a block diagram of an apparatus for communicating information on cross-border PLMN handover being enabled or disabled for a UE, a subscriber database (or component managing the subscriber database) comprising the apparatus, and a system comprising the subscriber database (or component managing the subscriber database).

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures, same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In general, a telecommunication system refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node (or component) in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI (Open Systems Interconnection) model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs, also denoted RAN component in the present disclosure), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and inter-net access, making them integral to personal, commercial, and industrial communication in today's interconnected world.

More details can be found in the 3GPP Technical Specifications (TS), e.g. 3GPP TS 23.501 V19.2.1 (2025-01), System Architecture for the 5G System (5GS), and 3GPP TS 23.502 V19.2.0 (2024-12), Procedures for the 5G System.

The systems specified by 3GPP are complex and the full set of specifications extends over thousands of pages. In the following some examples will be detailed that interact with or can be comprised in 3GPP systems. With respect to further details on technical aspects related to these systems beyond those described subsequently, it is referred to the 3GPP specifications.

Various examples of the present disclosure relate to controlling the seamless cross border mobility feature.

Cross-border PLMN handover is an important feature, in particular for loT (Internet of Things), M2M (Machine-to-Machine) and mission-critical services in scenarios such as Europe, where a device can move from country to country without service interruption.

The (seamless) cross-border PLMN handover is currently based on the use of ePLMN, which can be configured in the MME and delivered to the eNodeB (or other RAN node) during the attach (or registration) procedure or tracking area update. The cross-border PLMN handover can be done in connected mode or in idle mode. In the following, the connected mode is in focus. Connected mode means that the device is actively busy with the network e.g. in call or connect to data server.

In the following, the cross-border PLMN handover process is described.

In 4G networks, the initial context setup includes the UE sending a service request via NAS (Non-Access Stratum) signaling to the eNodeB. The eNodeB forwards the Service Request to the MME (via NAS signaling). The MME has configured mappings. It uses the IMSI (International Mobile Subscriber Identity) range to provide a handover (HO) restriction list (RL). The MME responds to the eNodeB with an initial context setup request, which includes the Handover Restriction List, and an NAS-PDU Attach accept. The eNodeB establishes a radio access bearer (RAB) with the UE, and provides an initial context setup response to the MME.

Outbound cross-border PLMN handover works as follows between a source PLMN and a target PLMN. Initially, at the source PLMN, there are one or more GTP (General Packet Radio Service Tunneling Protocol) tunnels (signaling plane) between the MME (Mobility Management Entity) of the source PLMN and the P_GW (Packet Data Network Gateway) of the source PLMN and one or more GTP tunnels (user plane) between the S_GW (Serving Gateway) and the P_GW. The UE (User Equipment) performs measurement reporting for the eNodeB (Evolved Node B, a base station/radio access network node) of the source PLMN. The eNodeB decides to trigger an S1 (the interface between the eNodeB and the MME/S-GW in LTE) handover and checks the IMSI and target TA (Tracking Area) against the handover restriction list. If the handover is required, it sends a corresponding message to the MME, which determines a foreign MME that is known from the neighboring cell detection procedure. The MME of the source PLMN sends a request to forward a relocation request to an IPX_Firewall (IP exchange firewall) of the source PLMN, which stores the EPS (Evolved Packet System) bearer context information and forwards the relocation request to the MME of the target PLMN (neighboring MME). The neighboring MME sends a create session request (one per context) to the S_GW of the target PLMN (neighboring S_GW), which responds with a create session response (one per context) to the neighboring MME. The neighboring MME transmits a handover request to an eNodeB of the target PLMN (neighboring eNodeB), which responds with a handover request acknowledgement. There is no indirect data forwarding in the cross-border PLMN handover case. The Neighboring MME sends a request to forward a relocation response to the IPX_Firewall of the source PLMN, which forwards the relocation response to the MME of the source PLMN. The MME of the source PLMN sends a handover command to the eNodeB of the source PLMN, and the eNodeB provides the handover command to the UE. The UE tunes to the new cell and sends a handover confirmation to the neighboring eNodeB. The neighboring eNodeB sends a handover notification message to the neighboring MME, which sends a request to forward a relocation completion notification to the IPX_Firewall of the source PLMN. The IPX_Firewall forwards the relocation completion notification to the MME of the source PLMN, which sends a request to forward a relocation completion acknowledgement to the IPX_Firewall, which is forwarded to the neighboring MME. The neighboring MME sends a modify bearer request (one per context) to the neighboring S_GW. The neighboring sends a modify bearer request to the IPX_Firewall, which initialized GTP tunnel state based on the stored EPS bearer context information. The IPX_Firewall sends a modify bearer request to the P_GW of the source PLMN, which performs Gx Gy procedures (where Gx is the reference point between the PCEF (Policy and Charging Enforcement Function) in the P-GW and the PCRF (Policy and Charging Rules Function) and Gy is the reference interface between the Online Charging System (OCS) and the Policy and Charging Enforcement Function (PCEF)). The P_GW responds with a modify bearer response (one per context), which the IPX_Firewall forwards to the neighboring S_GW. The neighboring S_GW forwards the modify bearer response to the neighboring MME and establishes GTP tunnels (user plane) with the IPX firewall. The neighboring S_GW further starts CDR (Call Detail Record) creation for inter-operator charging. Furthermore, a GTP tunnel is established between the P_GW of the source PLMN and the IPX_Firewall. Then, the tracking area update procedure is performed, and the MME of the source PLMN sends a delete session request (one per context) to the S_GW of the source PLMN and a UE context release command to the eNodeB of the source PLMN. The eNodeB of the source PLMN responds to the MME of the source PLMN with a UE context release complete message, and the S_GW of the source PLMN responds to the MME with a delete session response.

Currently, there is no possibility of switching off this service from the user side. The present disclosure provides a mechanism to allow the customer switch off/on cross-border PLMN handover.

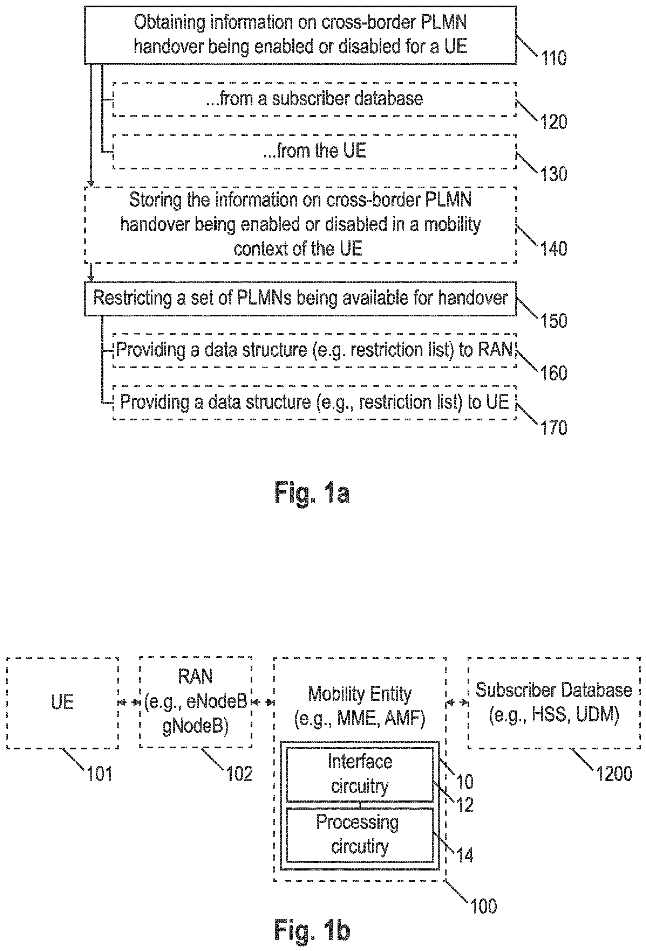

Fig. 1a shows a flow chart of an example of a method for restricting cross-border PLMN handover. The method comprises obtaining 110, 120, 130 information on cross-border PLMN handover being enabled or disabled for a UE being associated with a serving PLMN. The method comprises restricting 150, 160, 170 a set of PLMN being available for handover based on the information on the cross-border PLMN handover being enabled or disabled.

In general, the method of Fig. 1a may be performed by a mobility entity of the serving PLMN, which is part of the core network of the serving PLMN. For example, in 4G core networks, the mobility entity may be the MME, in 5G core networks, the mobility entity may be the AMF. However, the proposed concept is not limited to 4G or 5G networks and may be implemented in future generation networks or non-3GPP networks in components serving the functionality of a mobility entity, i.e., an entity controlling the mobility of UEs. For example, the serving PLMN may be the home PLMN of the UE, or a visited PLMN (i.e., a PLMN that is not the home PLMN of the UE). Accordingly, cross-border PLMN handover may occur not only between home PLMN (HPLMN) and visited PLMN (VPLMN), but also between VPLMN and HPLMN or between VPLMN and VPLMN.

Fig. 1b shows a block diagram of an apparatus 10 for restricting cross-border PLMN handover, and a mobility entity 100, such as an MME or AMF, comprising the apparatus 10. The apparatus 10 comprises interface circuitry 12 and processing circuitry 14 that is coupled with the interface circuitry. In general, the functionality of the apparatus 10 may be provided by the processing circuitry 14, in conjunction with the interface circuitry 12 (for exchanging data/information with one or more other entities, such as a RAN node/component 102, a UE 101, and/or a subscriber database 1200). In general, the functionality of the processing circuitry may be implemented by processing circuitry executing machine-readable instructions. Accordingly, any feature ascribed to the processing circuitry 14 may be defined by one or more instructions of a plurality of machine-readable instructions. The apparatus 10 may comprise the machine-readable instructions. The processing circuitry 14 is configured to perform the method of Fig. 1a.

The mobility entity 100 is part of a system (e.g., PLMN) further comprising the RAN node/component 102. A UE 101 may use the PLMN as serving PLMN. The mobility entity 100 is communicatively coupled with the RAN node/component 102 and/or the UE 101. The mobility entity 100 may further be communicatively coupled with a subscriber database 1200, either directly if the subscriber database 1200 is part of the serving PLMN, or indirectly in case the subscriber database 1200 is part of a different PLMN (i.e., the home PLMN of the UE).

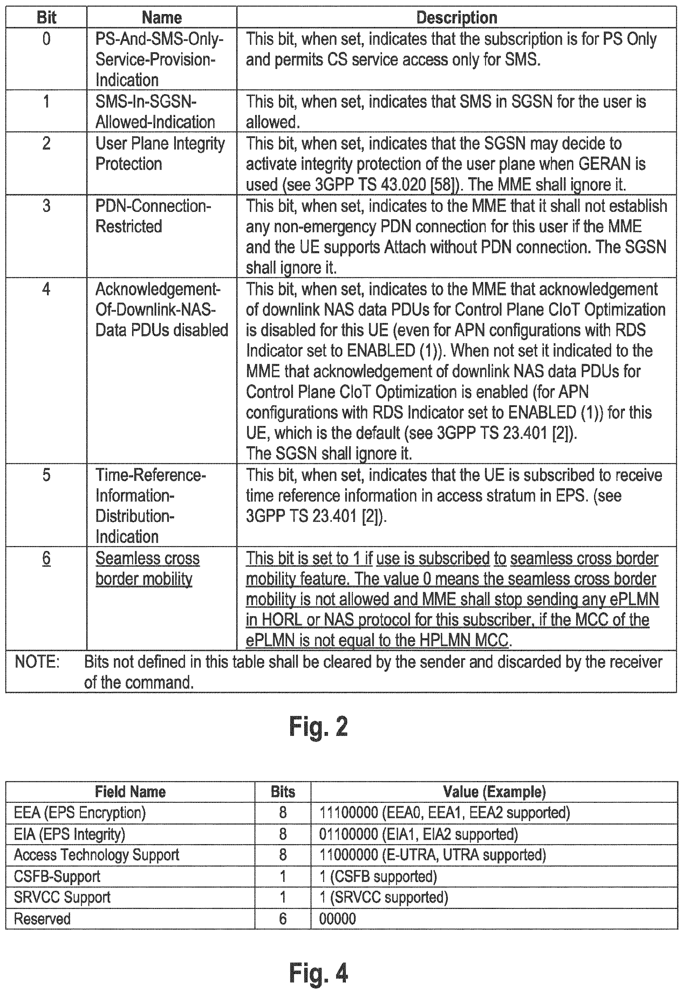

The features of the method of Fig. 1a and of the entities shown in Fig. 1b will now be introduced in more detail in connection with Figs. 2 to 11.

In the following, the proposed concept will be introduced in more detail for four different cases. A first group of examples relates to a 4G network, where the flag (i.e., the information on cross-border PLMN handover being enabled or disabled for a UE) is provided by the HSS of the home PLMN. A second group of examples also relates to a 4G network, where the flag is provided by the UE. A third group of examples relates to a 5G network, where the flag is provided by the UDM of the home PLMN. Finally, a fourth group of examples also relates to a 5G network, where the flag is provided by the UE.

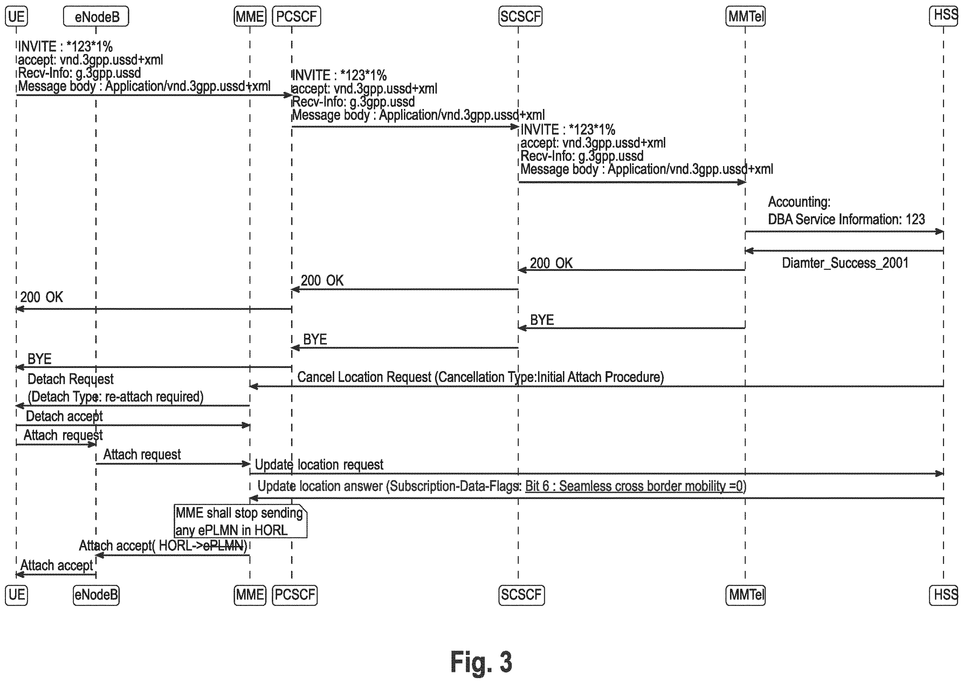

The first group of examples is, in the following, also denoted 4G network-side approach. In the 4G network-side approach, the customer (i.e., the user of the UE) may subscribe to the seamless cross border feature by indicating their preference to the operator of the home PLMN. For example, the user may provide information on a change of the cross-border PLMN handover being enabled or disabled for the UE to a subscriber database of the home PLMN using a USSD code (Unstructured Supplementary Service Data code), by calling a hotline, or by using a mobile application of the operator to inform the network about the wish to deactivate (disable) or activate (enable) the cross-border PLMN handover feature. For example, in case of USSD, a code can be used, such as *123*1# (see also Fig. 3) or any another code.

Once this USSD code reaches the HSS (or the UDM/UDR (Unified Data Repository), in case of 5G networks), the UDM/HSS may send a Cancel Location request to the MME to inform the UE that it needs to do initial attach (or registration, in case of 5G) again. Once the UE sends a new initial attach to the MME, the MME may send an Update Location request to the HSS. The HSS may answer with a new bit flag number 6 (shown in Fig. 2), which is proposed in the present disclosure, to inform the MME that seamless cross-border PLMN handover is not allowed for this user.

Thus, according to the method of Fig. 1a, in the case of the first group of examples, the act of obtaining the information on cross-border PLMN handover being enabled or disabled for the UE comprises obtaining 120 the information on cross-border PLMN handover being enabled or disabled for the UE (i.e., the bit flag 6) from a subscriber database of a home PLMN of the UE. As the MME obtains the flag in response to the new initial attach by the UE, the act of obtaining the information on cross-border PLMN handover being enabled or disabled for the UE is performed in response to the UE performing one an initial attach procedure (or a tracking area update procedure, or a registration procedure, in case of 5G).

The MME may store the Seamless Cross Boarder Mobility flag value in the User mobility context. In other words, the method of Fig. 1a may comprise storing 140 the information on cross-border PLMN handover being enabled or disabled for the UE in a mobility context of the UE.

For the purpose of storing the flag in the HSS (and providing it to the MME), the Subscription-Data-Flags data structure may be used (e.g., as defined in 3GPP TS 29.272 version 17.3.0 Release 17). In other words, the information on cross-border PLMN handover being enabled or disabled for the UE may be a flag (bit flag 6) in a subscription data flag data structure obtained from the subscriber database of the home PLMN. The Subscription-Data-Flags Attribute-Value Pair (AVP) is defined and used within the Diameter protocol to convey specific subscription-related information between network elements, such as the Home Subscriber Server (HSS) and the Mobility Management Entity (MME).

Fig. 2 shows an example table of subscription-data flags. As shown in Fig. 2, bit flag 6, denoted "Seamless cross border mobility" may be set to 1 if the user is subscribed to the seamless cross border mobility feature. The bit flag being set to 0 may mean that the seamless cross border mobility is not allowed, and that the MME shall stop sending any ePLMN in HORL (Handover Restriction List) or NAS protocol for this subscriber, if the MCC of the ePLMN is not equal to the HPLMN MCC. The MME may thus exclude the ePLMN from HORL (handover restriction list) if the bit flag is set to 0. In other words, a data structure restricting the PLMN being available for handover (e.g., a handover restriction list or mobility restriction list) limits the PLMN being available for handover to PLMN having a country code being the country code of the serving PLMN (which may be zero).

Fig. 3 shows a sequence diagram of changing and applying a flag for controlling a seamless cross-border PLMN handover feature in 4G networks from the network side. To change the flag, the UE can send a USSD code (*123*1% in this example) to the PCSCF (Proxy Call Session Control Function), which forwards the USSD code to the SCSCF (Serving Call Session Control Function), which forwards the USSD code to MMTel (Multimedia Telephony). MMTel interprets the USSD code and sends it on to the HSS to change the flag, which returns a success message that is propagated to the UE via MMTel, SCSCF and PCSCF. At this point, the changed flag is stored in the HSS. For example, the HSS may change the relevant database (UDR in some cases) to change the relevant attribute. The relevant database may notify the HSS about the change of the attribute, which may trigger a cancel location request.

The HSS processes the changes, and sends a cancel location request (of cancellation type: initial attach procedure) to the MME, which provides a detach request to the UE. The UE responds with a detach accept message to the MME and sends a new initial attach request to the eNodeB. The eNodeB provides the attach request to the MME. The MME sends an update location request to the HSS. The HSS returns an update location answer to the MME, comprising the Subscription-Data-Flags with Bit 6 being set to Seamless cross border mobility = 0. This flag indicates that the MME shall stop sending any ePLMN in HORL. The MME sends an attach accept message to the eNodeB, with a HORL that excludes any ePLMN. Thus, according to the method of Fig. 1a, the act of restricting the set of PLMN being available for handover may comprise providing 160, to a RAN component (e.g., the eNodeB, or more general, base station) of the serving PLMN, a data structure restricting the PLMN being available for handover, e.g., a handover restriction list or mobility restriction list. In other words, the act of restricting the set of PLMN being available for handover may comprise restricting the set of equivalent PLMN, ePLMN, being available for handover using a handover restriction list or mobility restriction list (or "data structure restricting the PLMN being available for handover" in the following). The eNodeB finally provides an attach accept to the UE.

As an alternative, or in addition to providing the HORL to the eNodeB, the MME may also transmit the handover restriction list (or a similar data structure) directly to the UE, e.g., via NAS signaling, as the UE has the capabilities to process lists of ePLMN. In other words, according to the method of Fig. 1a, the act of restricting the set of PLMN being available for handover may comprise providing 170, to the UE, a data structure restricting the PLMN being available for handover.

The same process can be triggered as well in case the customer asks the call center to deactivate the seamless cross mobility feature. Furthermore, the same process can be applied for the feature activation where the flag is set to 1

The second group of examples is, in the following, also denoted 4G device-side approach. In this approach, the UE informs the network (e.g., the MME) about the wish that no seamless cross-border PLMN handover is required. Thus, according to the method of Fig. 1a, the act of obtaining the information on cross-border PLMN handover being enabled or disabled for the UE may comprise obtaining 130 the information on cross-border PLMN handover being enabled or disabled for the UE from the UE. A new flag in the NAS protocol may be used for this purpose. For example, this flag may be part of the UE network capability flags, where the UE may set this flag to 1 in case the seamless cross border mobility is supported and to 0 in case not. Fig. 4 shows a table of current UE Network Capability flags. For example, the new flag may use one of the 6 currently reserved bits. More information about the UE Network Capability may be found, for example, in 3GPP TS 24.301 version 17.6.0 Release 17, Table 9.9.3.34.1: UE network capability information element. Fig 4 shows an example encoding of the UE Network Capability IE in a binary format.

The MME may check this parameter and might not deliver the ePLMN in HORL or in NAS in case the flag has the value 0, if the MCC of the ePLMN is not equal to the HPLMN (Home PLMN) MCC (Mobile Country Code). In other words, the act of restricting the set of PLMN being available for handover may comprise restricting the set of equivalent PLMN, ePLMN, being available for handover using a handover restriction list (or mobility restriction list, in case of 5G). For example, the act of restricting the set of PLMN being available for handover may comprise providing 160, 170, to a RAN component of the serving PLMN or to the UE, a data structure restricting the PLMN being available for handover. For example, the data structure restricting the PLMN being available for handover may limit the PLMN being available for handover to PLMN having a country code being the country code of the serving PLMN.

If the customer changes the setting to allow this feature, then the UE may perform a tracking area update with the new value. The operator may set the default value of the switch and change it using an OTA (Over-The-Air) mechanism.

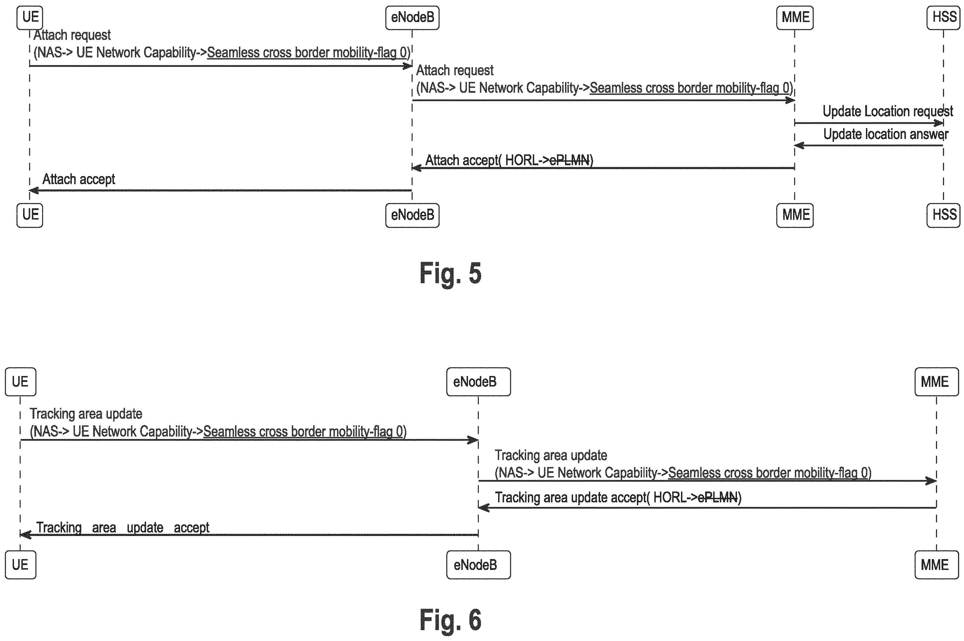

Fig. 5 shows a sequence diagram of changing and applying a flag for controlling a seamless cross-border PLMN handover feature in 4G networks from the UE side using an attach procedure. The sequence starts with the UE sending an attach request to the eNodeB. The attach request includes, in NAS signaling, the aforementioned UE network capability information element with the seamless cross border mobility flag being set to 0 (to disable cross-border PLMN handover). The eNodeB forwards the attach request to the MME. The MME sends an update location request to the HSS. Optionally, the MME may include the seamless cross border mobility flag being set to 0 to the HSS, so the flag can be stored by the HSS.

The HSS responds to the MME with an update location answer, which may include the seamless cross border mobility flag being set to 0. The MME sends an attach accept message to the eNodeB, with a HORL that excludes any ePLMN. Thus, according to the method of Fig. 1a, the act of restricting the set of PLMN being available for handover may comprise providing 160, to a RAN component (e.g., the eNodeB, or more general, base station) of the serving PLMN, a data structure restricting the PLMN being available for handover, e.g., a handover restriction list or mobility restriction list. In other words, the act of restricting the set of PLMN being available for handover may comprise restricting the set of equivalent PLMN, ePLMN, being available for handover using a handover restriction list or mobility restriction list (or "data structure restricting the PLMN being available for handover" in the following). The eNodeB finally provides an attach accept to the UE.

Fig. 6 shows a sequence diagram of changing and applying a flag for controlling a seamless cross-border PLMN handover feature in 4G networks from the UE side using a tracking area update procedure. The sequence starts with the UE sending a tracking area update the eNodeB. The tracking area update includes, in NAS signaling, the aforementioned UE network capability information element with the seamless cross border mobility flag being set to 0 (to disable cross-border PLMN handover). The eNodeB forwards the tracking area update to the MME. Optionally, the MME may transmit an update location request to the HSS to update the flag. The MME sends a tracking area update accept message to the eNodeB, with a HORL that excludes any ePLMN. Thus, according to the method of Fig. 1a, the act of restricting the set of PLMN being available for handover may comprise providing 160, to a RAN component (e.g., the eNodeB, or more general, base station) of the serving PLMN, a data structure restricting the PLMN being available for handover, e.g., a handover restriction list or mobility restriction list. In other words, the act of restricting the set of PLMN being available for handover may comprise restricting the set of equivalent PLMN, ePLMN, being available for handover using a handover restriction list or mobility restriction list (or "data structure restricting the PLMN being available for handover" in the following). The eNodeB finally provides a tracking area update accept to the UE.

As can be seen from Figs. 5 and 6, the act of restricting a set of PLMN being available for handover may be performed in response to the UE performing an initial attach procedure (Fig. 5), a tracking area update procedure (Fig. 6).

The same process can be applied for the feature activation where the flag is set to 1.

The third group of examples is, in the following, also denoted 5G network-side approach. This approach is implemented similar to the 4G network-side approach, albeit using different components due to the differences in architecture between 4G and 5G networks.

Similar to 4G, the access node (mobility node), which is the AMF, receives information about the subscribed services from UDM. This information can be delivered as part of the Nudm_SDM_Get operation or as a direct notification of the subscription. The Nudm_SDM_Get operation is a network function service used to retrieve subscriber data from the Unified Data Management (UDM) related to Session Management Data (SDM). A new flag may be used to indicate whether cross border mobility is enabled (i.e., information on cross-border PLMN handover being enabled or disabled for an UE), which can be part of the SubscriptionDataSets->amData->AccessAndMobilitySubscriptionData. For example, Acces-sAndMobilitySubscriptionData is specified in 3GPP 29.503 table 6.1.6.2.4. Accordingly, the information on cross-border PLMN handover being enabled or disabled for the UE may be a flag in an Access and Mobility Portion of a Subscription Data Sets data structured obtained from the subscriber database of the home PLMN.

For example, a new flag with name amCBM (access and mobility cross border mobility) may be used for this purpose (corresponding to the information on cross-border PLMN handover being enabled or disabled for a UE). The flag may have binary values (0 or 1), where 0 means the feature is deactivated (disabled) by the subscriber and 1 means the feature is activated (enabled). The AMF may store the amCBM value in the user mobility context. In other words, the method may comprise storing 140 the information on cross-border PLMN handover being enabled or disabled for the UE in a mobility context of the UE.

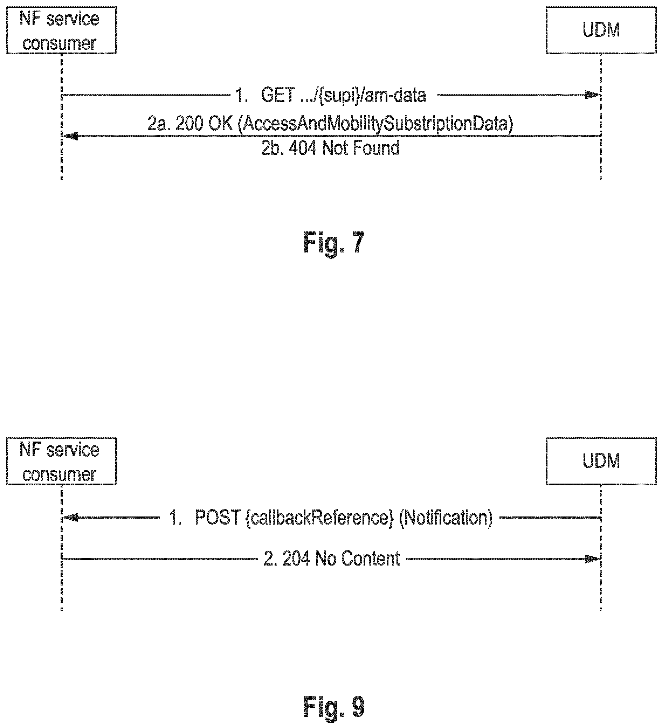

Fig. 7 shows a sequence diagram of retrieving a flag for controlling a seamless cross-border PLMN handover feature in the UDM of 5G networks. The NF service consumer (i.e., the AMF in this case) sends a GET request to .../{supi}/am-data to the UDM. The UDM can respond with a 200 OK response code (if AccessAndMobilitySubstriptionData is found) or with a 404 Not Found code otherwise.

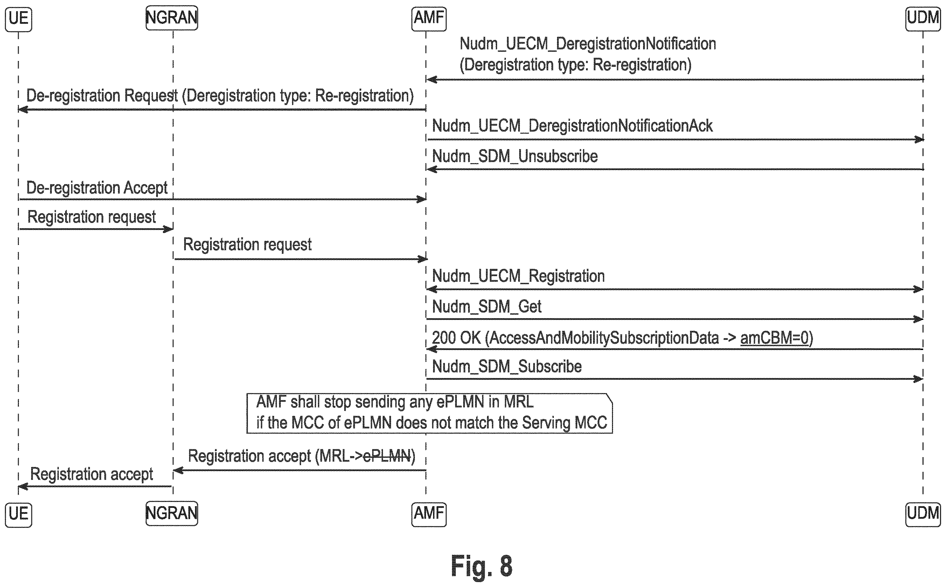

Fig. 8 shows a sequence diagram of applying a flag for controlling a seamless cross-border PLMN handover feature in 5G networks from the network side using a de-registration procedure. The sequence starts at the point where the UDM has received information on a change of the cross-border PLMN handover being enabled or disabled for the UE, e.g., similar to the procedure of Fig. 3. The UDM sends Nudm_UECM_DeregistrationNotification (Deregistration type: Re-registration) to the AMF, with provides a De-registration Request (Deregistration type: Re-registration) to the UE. A Nudm_UECM_DeregistrationNotification is a notification message in 5G network architecture used to inform the Unified Data Management (UDM) system about the deregistration of a User Equipment (UE) from the network. The AMF also provides an Nudm_UECM_DeregistrationNotificationAck (Acknowledgement) to the UDM. The UDM responds with an Nudm_SDM_Unsubscribe to the AMF. Nudm_SDM_Unsubscribe is a service operation within the 5G System Architecture, specifically part of the interactions between network functions, such as the AMF, and the UDM. It is used to cancel or unsub-scribe from previously set up notifications or subscriptions for updates or changes in subscriber information in the Subscriber Data Management (SDM) context.

The UE responds to the de-registration request by transmitting a de-registration accept to the AMF. To re-register, the UE sends a new registration request to the NG-RAN. The NG-RAN provides the registration request to the AMF. The AMF performs Nudm_UECM_Registration at the UDM. A Nudm_UECM_Registration refers to a procedure in 5G mobile networks where a User Equipment (UE) registers with the User Data Management (UDM) component using the Unified Data Management (UDM) function's UE Context Management (UECM) service. This process involves the exchange of necessary information between the UE and UDM to establish and manage user context. The AMF further provides a NUDM_SDM_Get request to the UDM. Nudm_SDM_Get is an API operation within the 5G network architecture that involves the network function known as the Unified Data Management (UDM) retrieving subscriber data from the Subscription Data Management (SDM) database. The UDM responds to the AMF with a 200 OK response code, with the response comprising the AccessAndMo-bilitySubscriptionData -> amCBM being set to 0. The AMF then sends a Nudm_SDM_Subscribe request to the UDM, to subscribe to notifications from the UDM regarding the SDM.

If the AMF receives an amCBM value of 0 from the UDM, the AMF might not send any ePLMN in the MRL (mobility restriction list) to NG-RAN if the MCC (Mobile Country code) of the ePLMN does not match the Serving MCC. Thus, according to the method of Fig. 1a, the act of restricting the set of PLMN being available for handover may comprise providing 160, to a RAN component (e.g., the NG-RAN) of the serving PLMN, a data structure restricting the PLMN being available for handover, e.g., a handover restriction list or mobility restriction list. In other words, the act of restricting the set of PLMN being available for handover may comprise restricting the set of equivalent PLMN, ePLMN, being available for handover using a handover restriction list or mobility restriction list (or "data structure restricting the PLMN being available for handover").

As an alternative, or in addition to providing the HORL to the NG-RAN, the AMF may also transmit the handover restriction list (or a similar data structure) directly to the UE, e.g., via NAS signaling, as the UE has the capabilities to process lists of ePLMN. In other words, according to the method of Fig. 1a, the act of restricting the set of PLMN being available for handover may comprise providing 170, to the UE, a data structure restricting the PLMN being available for handover.

As outlined above, the AMF might not send any ePLMN in the MRL (mobility restriction list) to NG-RAN if the MCC (Mobile Country code) if the ePLMN does not match the Serving MCC. In other words, the data structure restricting the PLMN being available for handover may limit the PLMN being available for handover to PLMN having a country code being the country code of the serving PLMN.

The AMF sends the MRL (without ePLMN) as part of a registration accept message to the NGRAN. The NGRAN sends registration accept message to the UE.

In a modification, notifications may be used to apply the changed flag without connection loss. In particular, the Nudm_SDM_Notification operation may be used to inform the AMF about the change in data subscriber. In other words, according to the method of Fig. 1a, the information on cross-border PLMN handover being enabled or disabled for the UE may be obtained 120 as part of a notification for notifying the mobility entity of a change to the subscriber database. For example, a new notification item may be added to inform the AMF about the change of the subscription data, indicating that cross-border PLMN handover is not anymore required for this customer.

This modification is used to allow updating the subscription info without connection loss. The amCBM may still be contained in AccessMobilitySubscription.

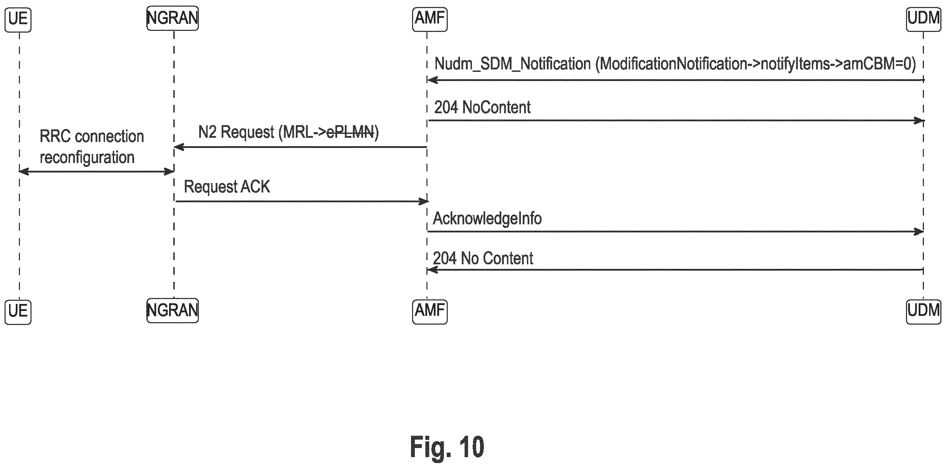

Figs. 9 and 10 show sequence diagrams of applying a flag for controlling a seamless cross-border PLMN handover feature in 5G networks from the network side using a notification. Fig. 9 shows the use of a notification by an NF service consumer, such as the AMF. The UDM sends a POST message with a callbackReference and the notification. The NF service consumer responds with a 204 No Content response code to acknowledge receipt of the notification.

In the present context, the UMD sends the Nudm_SDM_Notification comprising a Modifica-tionNotification, where the notifyltems include amCBM being set to 0 (as information on cross-border PLMN handover being disabled for a UE). The AMF responds with a 204 No Content response code. The AMF sends a N2 Request with an updated MRL (mobility restriction list without ePLMN) to the NGRAN. The MRL is the restricting the PLMN being available for handover. A N2 Request is a signaling message exchanged between the AMF and the NGRAN over the N2 interface. The N2 interface is responsible for signaling related to control and mobility management in the 5G network. The NGRAN further sends a request acknowledgement to the AMF. The AMF sends an Acknowledgelnfo message to the UDM, which responds with a 204 No Content response code.

The same process can be applied for the feature activation where the flag is set to 1

The fourth group of examples is, in the following, also denoted 5G device-side approach. This approach is implemented similar to the 4G device-side approach, albeit using different components due to the differences in architecture between 4G and 5G networks.

Analogous to 4G, 5G may still use the NAS protocol for communication with UE. Thus, according to the method of Fig. 1a, the act of obtaining the information on cross-border PLMN handover being enabled or disabled for the UE may comprise obtaining 130 the information on cross-border PLMN handover being enabled or disabled for the UE from the UE (e.g., as NAS message). The UE may include a new flag in the registration request under UE network capability. For example, this flag may be part of the UE network capability flags, where the UE may set this flag to 1 in case the seamless cross border mobility is supported and to 0 in case not.

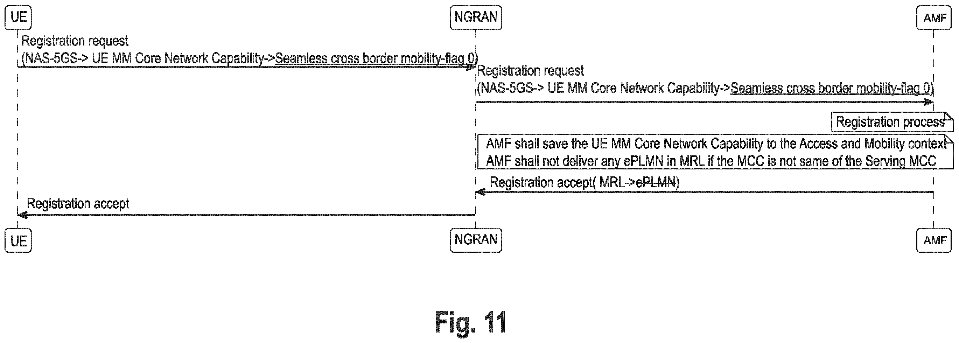

Fig. 11 shows a sequence diagram of changing and applying a flag for controlling a seamless cross-border PLMN handover feature in 5G networks from the UE side using a registration procedure. The sequence starts with the UE sending a registration request to the NGRAN, with the registration request comprising, as NAS-5GS (Non-Access Stratum for 5G Systems) message, a UE MM Core Network Capability information, in which the seamless cross border mobility-flag is set to 0. The NGRAN forwards the registration request to AMF. At the AMF, a registration process is performed.

The AMF may check this flag and might not deliver a ePLMN (Equivalent Public Land Mobile Network) in the MRL (Mobility Restriction List) or in NAS if the flag has the value 0, provided that the MCC (Mobile Country Code) of the ePLMN is not equal to the HPLMN (Home Public Land Mobile Network) MCC. Optionally, the AMF may update the UDM about the change as part of the registration process with the UDM. In other words, the act of restricting the set of PLMN being available for handover may comprise restricting the set of equivalent PLMN, ePLMN, being available for handover using a handover restriction list (or mobility restriction list, in case of 5G). For example, the act of restricting the set of PLMN being available for handover may comprise providing 160, 170, to a RAN component of the serving PLMN or to the UE, a data structure restricting the PLMN being available for handover. For example, the data structure restricting the PLMN being available for handover may limit the PLMN being available for handover to PLMN having a country code being the country code of the serving PLMN.

The AMF sends a registration accept with a corresponding mobility restriction list (without ePLMN having an MCC that does not match the MCC of the serving PLMN) to the NGRAN. The NGRAN sends a registration accept message to the UE.

If the customer changes the setting to allow this feature, then the UE may perform a registration request with the new value. The operator may be able to set the default value of the switch and change it using an OTA (Over-The-Air) mechanism. The AMF may store the UE MM Core Network Capability with the seamless cross-border mobility flag in the User mobility context. In other words, the method of Fig. 1a may comprise storing 140 the information on cross-border PLMN handover being enabled or disabled for the UE in a mobility context of the UE.

As can be seen from Fig. 11, the act of restricting a set of PLMN being available for handover may be performed in response to the UE performing a registration procedure.

The same process can be applied for the feature activation where the flag shall be set to 1

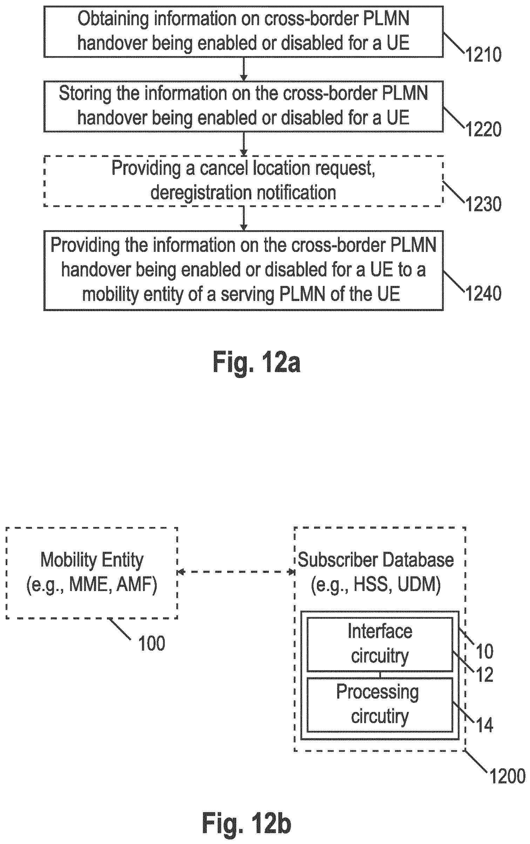

More details and aspects of the method, apparatus, and of a corresponding computer program are mentioned in connection with the proposed concept or one or more examples described above or below (e.g. Fig. 12a to 12b). The method, apparatus, and of a corresponding computer program may comprise one or more additional optional features corresponding to one or more aspects of the proposed concept or one or more examples described above or below.

In connection with Figs. 1a to 11, the proposed procedure was primarily discussed with respect to the respective mobility entity and UE. In various examples of the present disclosure, the flag being used to enable or disable seamless cross-border PLMN handover is stored in the respective subscriber database (e.g., the HSS or the UDM/UDR).

Fig. 12a shows a flow chart of an example of a method for communicating information on cross-border PLMN handover being enabled or disabled for a UE. The method comprises obtaining 1210 information on a change of the cross-border PLMN handover being enabled or disabled for the UE. The method comprises storing 1220 the information on the cross-border PLMN handover being enabled or disabled for the UE. The method comprises providing 1240 the information on the cross-border PLMN handover being enabled or disabled for the UE to a mobility entity of a serving PLMN of the UE.

Fig. 12b shows a block diagram of an apparatus 10 for communicating information on cross-border PLMN handover being enabled or disabled for a UE, a subscriber database (or component managing the subscriber database), such as the HSS or UDM, 1200 comprising the apparatus 10. The apparatus 10 comprises interface circuitry 12 and processing circuitry 14 that is coupled with the interface circuitry. In general, the functionality of the apparatus 10 may be provided by the processing circuitry 14, in conjunction with the interface circuitry 12 (for exchanging data/information with one or more other entities, such as a mobility entity 100). In general, the functionality of the processing circuitry may be implemented by processing circuitry executing machine-readable instructions. Accordingly, any feature ascribed to the processing circuitry 14 may be defined by one or more instructions of a plurality of machine-readable instructions. The apparatus 10 may comprise the machine-readable instructions. The processing circuitry 14 of Fig. 12 is configured to perform the method of Fig. 12a. Fig. 12b further shows a system comprising the subscriber database (or component managing the subscriber database) and the respective mobility entity 100.

The method of Fig. 12a has three components - obtaining 1210 the information on a change of the cross-border PLMN handover being enabled or disabled for the UE, storing 1220 the information on the cross-border PLMN handover being enabled or disabled for the UE, and providing 1240 the information on the cross-border PLMN handover being enabled or disabled for the UE to a mobility entity of a serving PLMN of the UE. The first component (obtaining 1210 the information on a change of the cross-border PLMN handover being enabled or disabled for the UE) is briefly discussed in connection with Fig. 3. In Fig. 3, an USSD code (*123*1%) is used to transmit the information on a change of the cross-border PLMN handover being enabled or disabled for the UE to the subscriber database (HSS in Fig. 3), via the PCSCF, SCSCF and the MMTel. Alternatively, the user can provide the information on a change of the cross-border PLMN handover being enabled or disabled for the UE via a hotline of the operator, via a website of the operator or via a mobile application of the operator. Once the subscriber database receives the information on a change of the cross-border PLMN handover being enabled or disabled for the UE, it stores the new value in the subscriber database (storing 1220 the information on the cross-border PLMN handover being enabled or disabled for the UE). Then, the stored information can be provided to the mobility entity (providing 1240 the information on the cross-border PLMN handover being enabled or disabled for the UE to a mobility entity).

To make sure that the updated setting is considered right away, the mobility entity may be triggered to retrieve the new value. This can be done by providing a cancel location request or a deregistration notification to the mobility entity, e.g., as shown in Fig. 3 (Cancel Location Request (Cancellation Type: Initial Attach Procedure)) or Fig. 8 (Nudm_UECM_Deregistra-tionNotification (Deregistration type: Re-registration)). In other words, the method of Fig. 12a may comprise, prior to providing the information on the cross-border PLMN handover being enabled or disabled for the UE to the mobility entity, providing 1230 a cancel location request or a deregistration notification to the mobility entity, to cause the mobility entity to obtain the changed information on the cross-border PLMN handover being enabled or disabled for the UE.

Alternatively, as shown in Fig. 10 (Nudm_SDM_Notification (ModificationNotification->notify-Items->amCBM=0)), the subscriber database (e.g., UDM) may provide a notification to the mobility entity (e.g., to the AMF). In other words, the information on the cross-border PLMN handover being enabled or disabled for the UE may be provided to the mobility entity as part of a notification.

More details and aspects of the method, apparatus, and of a corresponding computer program are mentioned in connection with the proposed concept or one or more examples described above or below (e.g. Fig. 1a to 11). The method, apparatus, and of a corresponding computer program may comprise one or more additional optional features corresponding to one or more aspects of the proposed concept or one or more examples described above or below.

The interface circuitry 12 of the apparatus 10 of Figs. 1b and/or 12b may correspond to one or more inputs and/or outputs for receiving and/or transmitting information, which may be in digital (bit) values according to a specified code, within a module, between modules or between modules of different entities. For example, the interface circuitry 12 may comprise interface circuitry configured to receive and/or transmit information. The processing circuitry 14 of the apparatus 10 of Figs. 1b and/or 12b may be implemented using one or more processing units, one or more processing devices, any means for processing, such as a processor, a computer or a programmable hardware component being operable with accordingly adapted software. In other words, the described function of the processing circuitry 14 may as well be implemented in software, which is then executed on one or more programmable hardware components. Such hardware components may comprise a general-purpose processor, a Digital Signal Processor (DSP), a micro-controller, etc.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method for restricting cross-border Public Land Mobile Network, PLMN, handover, the method comprising:
obtaining (110; 120; 130) information on cross-border PLMN handover being enabled or disabled for a User Equipment, UE, being associated with a serving PLMN; and
restricting (150, 160, 170) a set of PLMN being available for handover based on the information on the cross-border PLMN handover being enabled or disabled.

2. The method according to claim 1, wherein the act of restricting the set of PLMN being available for handover comprises restricting the set of equivalent PLMN, ePLMN, being available for handover using a handover restriction list or mobility restriction list.

3. The method according to one of the claims 1 or 2, wherein the act of restricting the set of PLMN being available for handover comprises providing (160), to a Radio Access Network, RAN, component of the serving PLMN, a data structure restricting the PLMN being available for handover.

4. The method according to one of the claims 1 or 2, wherein the act of restricting the set of PLMN being available for handover comprises providing (170), to the UE, a data structure restricting the PLMN being available for handover.

5. The method according to one of the claims 3 or 4, wherein the data structure restricting the PLMN being available for handover limits the PLMN being available for handover to PLMN having a country code being the country code of the serving PLMN

6. The method according to one of the claims 1 to 4, wherein the act of obtaining the information on cross-border PLMN handover being enabled or disabled for the UE comprises obtaining (120) the information on cross-border PLMN handover being enabled or disabled for the UE from a subscriber database of a home PLMN of the UE.

7. The method according to claim 6, wherein the information on cross-border PLMN handover being enabled or disabled for the UE is a flag in a subscription data flag data structure obtained from the subscriber database of the home PLMN or a flag in an Access and Mobility Portion of a Subscription Data Sets data structured obtained from the subscriber database of the home PLMN.

8. The method according to one of the claims 6 or 7, wherein the act of obtaining the information on cross-border PLMN handover being enabled or disabled for the UE is performed in response to the UE performing one of an initial attach procedure, a tracking area update procedure or a registration procedure.

9. The method according to one of the claims 6 or 7, wherein the information on cross-border PLMN handover being enabled or disabled for the UE is obtained (120) as part of a notification for notifying the mobility entity of a change to the subscriber database.

10. The method according to one of the claims 1 to 5, wherein the act of obtaining the information on cross-border PLMN handover being enabled or disabled for the UE comprises obtaining (130) the information on cross-border PLMN handover being enabled or disabled for the UE from the UE.

11. The method according to one of the claims 1 to 10, wherein the method is performed by a mobility entity of a core network of a serving PLMN of the UE.

12. A method for communicating information on cross-border Public Land Mobile Network, PLMN, handover being enabled or disabled for a User Equipment, UE, the method comprising:
obtaining (1210) information on a change of the cross-border PLMN handover being enabled or disabled for the UE;
storing (1220) the information on the cross-border PLMN handover being enabled or disabled for the UE; and
providing (1240) the information on the cross-border PLMN handover being enabled or disabled for the UE to a mobility entity of a serving PLMN of the UE.

13. The method according to claim 12, wherein the method comprises, prior to providing the information on the cross-border PLMN handover being enabled or disabled for the UE to the mobility entity, providing (1230) a cancel location request or a deregistration notification to the mobility entity, to cause the mobility entity to obtain the changed information on the cross-border PLMN handover being enabled or disabled for the UE,
or wherein the information on the cross-border PLMN handover being enabled or disabled for the UE is provided to the mobility entity as part of a notification.

14. An apparatus (10) for a network node (100; 1200) for a Public Land Mobile Network, PLMN, the apparatus (10) comprising processing circuitry (14) configured to perform the method according to one of the claims 1 to 11 or the method according to one of the claims 12 to 13.

15. A computer program having a program code for performing the method of one of the claims 1 to 11 or the method according to one of the claims 12 to 13, when the computer program is executed on a computer, a processor, or a programmable hardware component.
